# FASCICULE DE BREVET EUROPEEN

(11) **EP 2 078 558 B1**
(45) Date de publication et mention de la délivrance du brevet: **20.07.2011**
(21) Numéro de dépôt: 08172826.3
(22) Date de dépôt: 23.12.2008
(51) Int. Cl.: B01J 8/00, B01J 8/02, B01J 4/00, C10G 45/02, C10G 35/04

(54) **Dispositif pour réduire l'effet de la vitesse d'impact d'un fluide sur un lit fixe de particules solides, réacteur équipé d'un tel dispositif et leurs utilisations**
Vorrichtung zur Verminderung des Aufprallgeschwindigkeitseffekts einer Fluide auf ein feststehendes Lager aus Festteilchen, mit einer solchen Vorrichtung ausgestatteter Reaktor und ihre Anwendungen
Device for reducing the effect of the speed of impact of a fluid on a fixed bed of solid particles, reaction chamber equipped with such a device and uses thereof

(30) Priorité: 26.12.2007 FR 0709098
(43) Date de publication de la demande: 15.07.2009
(73) Titulaire: TOTAL RAFFINAGE MARKETING, 92800 Puteaux (FR)
(72) Inventeur: Delsart, Olivier, 76600 Le Havre (FR); Nascimento, Pedro, 76620 Le Havre (FR); Vedrine, Denis, 44160 Crossac (FR)
(74) Mandataire: Roger, Walter

(56) Documents cités:
- EP-A- 1 023 937
- WO-A-03/000401
- FR-A- 2 824 280
- US-A- 3 469 950
- US-A- 4 285 910

## Description

La présente invention concerne un dispositif pour réduire l'effet de la vitesse d'impact d'un fluide sur un lit fixe de particules solides, et en particulier un lit fixe de catalyseur contenu dans un réacteur, et limiter les re-circulations radiales superficielles de ce fluide dans ledit lit. Elle concerne également un réacteur comprenant un tel dispositif, ainsi que leurs utilisations.

Les réacteurs chimiques, et particulièrement les réacteurs chimiques à lit fixe, sont généralement alimentés en continu par un fluide, qui peut être un gaz et/ou un liquide, utilisé seul ou en mélange. Par lit fixe, ou lit granulaire, on entend un ensemble de particules solides ayant la forme de grains, ces grains pouvant avoir une forme quelconque, mais le plus souvent, cylindrique ou sphérique, et ayant des dimensions typiques de l'ordre de quelques millimètres. Ces solides granulaires présentent avantageusement une activité catalytique, et sont, le plus souvent, surmontés par un lit de billes inertes afin de corriger les défauts de distribution de la charge.

Dans de tels réacteurs, la distribution de la charge à traiter se fait généralement par un conduit alimentant le réacteur de diamètre inférieur à celui du réacteur. Ceci cause inévitablement une distribution non homogène de la charge, c'est-à-dire qu'elle ne se fait pas de la même manière suivant toute la section transversale du réacteur.

De plus, lorsque le conduit alimentant le réacteur présente une ou plusieurs singularités, (géométries particulières de la conduite, telles qu'un coude, par exemple à 90°, une forme en S, un élargissement ou un rétrécissement de la conduite) à proximité immédiate de son raccordement audit réacteur, ces singularités provoquent des variations de la vitesse de l'écoulement du fluide, perturbant ainsi, de façon sensible, la distribution de celui-ci dans le réacteur.

Ces perturbations peuvent provoquer des déformations physiques, telles que des vagues ou des cratères, sur la surface du lit catalytique, ou encore provoquer l'attrition de la couche supérieure du lit et favoriser des mouvements de fines de catalyseur ainsi formées, qui sont autant de handicaps pour un fonctionnement optimisé du réacteur.

Afin de distribuer le fluide de la façon la plus homogène possible en tête du réacteur, et de minimiser les incidents de fonctionnement dus à des bouleversements de la surface du lit catalytique et, par conséquent, augmenter la durée du cycle de fonctionnement, on a suggéré de disposer un distributeur assurant la distribution de la charge, appelé également diffuseur d'entrée, en amont du lit fixe, tel que décrit dans le document FR 2 824 280.

Comme la distance entre la singularité et le distributeur est généralement trop faible pour permettre au profil de vitesse de s'homogénéiser naturellement, on a également suggéré de disposer un pré-distributeur à l'intérieur du conduit d'alimentation, en aval de la singularité, et en amont de l'orifice par lequel le conduit d'alimentation débouche dans le réacteur à alimenter, tel que décrit dans le document FR 2 824 280. Ce pré-distributeur est un dispositif additionnel au distributeur, situé en amont de ce dernier et permettant d'assurer un meilleur fonctionnement du distributeur.

Certes de tels systèmes de pré-distribution améliorent l'homogénéité de la distribution du fluide, et atténuent les effets dus à la présence de singularités, mais cette amélioration reste insuffisante pour atténuer efficacement l'effet de la vitesse d'impact sur le lit catalytique.

On entend par vitesse d'impact du fluide, la vitesse avec laquelle le fluide entre en contact avec les billes et/ou le catalyseur situé au sommet du lit fixe installé dans le réacteur.

La vitesse d'un fluide dans un espace en trois dimensions est définie par trois composantes. Dans les coordonnées cylindriques on parle des composantes axiale, radiale, et tangentielle. La vitesse axiale est la composante de la vitesse dans la direction principale de l'écoulement qui est aussi celle de l'axe du réacteur (vertical en général). La vitesse radiale est la composante radiale (horizontale en général, centrifuge ou centripète). La vitesse tangentielle est la composante tangentielle (représentant la rotation dans un plan horizontal en général).

La vitesse d'impact à la surface du lit est ainsi formée d'une composante verticale et de deux composantes horizontales (radiale et tangentielle). Les composantes horizontales constituent ce que l'on peut appeler la vitesse de balayage. Mathématiquement, la valeur d'une vitesse d'un fluide est déterminée par la norme de son vecteur vitesse qui est définie comme la racine carrée de la somme de chacune de ses trois composantes élevées au carré. Par ailleurs, la valeur de la vitesse de balayage sera calculée par la racine carrée de la somme des normes de ses composantes radiale et tangentielle élevées au carré.

Malgré l'invention décrite dans le FR 2 824 280, on continue de constater à la surface des lits fixes des réacteurs, tels que les réacteurs d'hydrotraitement ou de réformage de charges hydrocarbonées, de fortes vitesses superficielles, provoquant la perturbation et l'attrition de la couche supérieure du lit ; l'entraînement de fines de catalyseur ; l'augmentation de la perte de charge ; la création de zones de recirculation ainsi que l'augmentation du temps de séjour du fluide dans la partie haute du réacteur.

De plus, les pré-distributeurs et distributeurs installés, de plus en plus complexes, augmentent les coûts de matériel et de maintenance, et présentent en outre l'inconvénient d'occuper une hauteur d'engagement importante dans l'enceinte du réacteur, ce qui est souvent au détriment de la masse du catalyseur.

La demanderesse se propose d'apporter une solution technique aux problèmes causés par la vitesse d'impact du fluide au niveau du lit catalytique.

A cette fin, l'invention propose un dispositif pour atténuer l'effet de la vitesse d'impact d'un fluide sur un lit fixe de particules solides en diminuant principalement la vitesse de balayage, mais en réduisant aussi la vitesse d'impact résultante. Le dispositif est caractérisé en ce qu'il comporte au moins un élément déflecteur destiné à être placé à la surface dudit lit fixe dans le flux de fluide, ledit élément déflecteur étant apte à dévier l'écoulement de fluide de manière à permettre une réduction d'au moins 10% la valeur maximale de la vitesse de balayage du fluide et d'au moins 25% sa valeur moyenne, ledit dispositif comprenant un ou plusieurs déflecteurs tel que défini dans la revendication 1.

L'invention propose également l'utilisation d'un tel dispositif dans un réacteur catalytique.

Ainsi, l'invention a aussi pour objet un réacteur catalytique équipé du dispositif selon l'invention, ainsi que ses utilisations dans le traitement de charges liquides et/ou gazeuses dans un réacteur contenant un lit fixe de catalyseur.

L'invention présente plusieurs avantages, dont un significatif est la diminution des vitesses de balayage, tout en réduisant simultanément les vitesses d'impact. Des vitesses de balayage plus faibles permettent d'éviter les phénomènes de re-circulations, de cisaillement et d'entraînement à la surface du lit catalytique. D'autre part, elles permettent de réduire la création de fines de catalyseur provoquée par des phénomènes d'attrition de la couche superficielle du lit catalytique.

En outre, l'invention permet d'assurer un maintien mécanique du lit catalytique de sorte que les perturbations physiques à la surface du lit catalytique sont minimisées.

La mise en oeuvre de l'invention permet également d'obtenir une meilleure distribution du temps de séjour de la charge dans le réacteur, ce qui évite les réactions secondaires, souvent à l'origine de formation de dépôts, tels que des gommes, susceptibles de générer une perte de charge supplémentaire et de réduire, ainsi, le temps de cycle de l'unité.

Le dispositif selon l'invention permet également d'accroître la hauteur du lit catalytique, car une partie des billes inertes, pouvant atteindre jusqu'à 10 % de son volume, peut être remplacée par le catalyseur, avec pour conséquence une durée de cycle plus favorable.

Ledit dispositif permet également d'accroître le débit de la charge traitée sans dégrader la qualité de la distribution de celle-ci dans le réacteur et notamment sur toute la surface transversale de celui-ci et, plus particulièrement, sur la surface du lit catalytique.

Suivant d'autres particularités de l'invention, le dispositif de réduction de l'effet de la vitesse d'impact du fluide peut être formé d'au moins une paroi en un matériau imperméable au fluide.

Dans une première variante, chaque élément déflecteur est formé d'au moins une paroi imperméable de section ouverte incurvée ou plane.

Dans une autre variante, chaque élément déflecteur est formé d'une paroi imperméable de section fermée courbe ou polygonale du type « en nid d'abeilles ».

Plus particulièrement, le dispositif peut alors comprendre une pluralité d'éléments déflecteurs dimensionnés de manière à pouvoir être disposés de manière concentrique les uns par rapport aux autres.

En particulier, le dispositif peut comprendre une pluralité d'éléments déflecteurs disposés de manière concentrique les uns par rapport aux autres.

En variante, le dispositif peut comprendre au moins un élément déflecteur formé d'une pluralité de parois imperméables solidaires les unes des autres de manière à former des alvéoles agencées en réseau.

La structure en réseau ainsi formée peut par exemple être du type en nids d'abeille avec des alvéoles hexagonales. Tout autre type de réseau peut toutefois être réalisé.

Avantageusement, lesdits éléments déflecteurs sont reliés les uns aux autres par des moyens de fixation amovibles.

Ces éléments déflecteurs peuvent alors être réalisés de dimensions suffisamment faibles pour pouvoir être introduits individuellement dans le réacteur, par exemple par le trou d'homme de ce dernier, les éléments déflecteurs étant ensuite assemblés à l'intérieur du réacteur.

Par exemple, un dispositif formé d'un cylindre ou tronc de cône peut être obtenu par l'assemblage de plusieurs éléments déflecteurs formant chacun une section de cylindre ou de tronc de cône. Un dispositif formé de plusieurs cylindres ou troncs de cône disposés concentriquement peut être obtenu de la même manière. Bien entendu, d'autres formes que des cylindres ou des troncs de cône peuvent être envisagées.

De très nombreuses formes différentes de dispositif peuvent être réalisées, car il suffit en effet que le dispositif modifie l'écoulement du fluide à proximité immédiate de la surface du lit catalytique.

De préférence, la hauteur émergée du dispositif au dessus du lit catalytique sera suffisante pour que la partie immergée du dispositif assure son maintien dans le lit, l'ensemble provoquant alors une telle modification. La hauteur émergée peut être par exemple de l'ordre d'une dizaine de millimètres à une dizaine de centimètres.

Avantageusement, le dispositif peut comporter au moins un moyen de maintien desdits éléments déflecteurs.

De tels moyens de maintien permettent d'assurer le maintien en position des éléments déflecteurs sur le lit fixe et d'éviter au dispositif de s'enfoncer complètement dans le lit catalytique.

De préférence, ledit moyen de maintien est un pied solidaire desdits éléments déflecteurs et destiné à être implanté dans le lit catalytique.

Plus particulièrement, le pied sera implanté dans la couche de particules ou de billes solides située dans la partie supérieure du lit de catalyseur.

L'implantation d'une partie du dispositif dans le lit catalytique présente l'avantage de stabiliser la partie supérieure du lit catalytique, généralement formée du lit de billes. Ce rôle stabilisateur permet d'assurer le maintien mécanique du lit catalytique.

Ce moyen de maintien sera par exemple une grille.

L'invention-concerne également l'utilisation du dispositif selon l'invention pour réduire l'effet de la vitesse d'impact d'un fluide sur un lit fixe de particules solides pour le traitement d'un flux de fluide dans un réacteur catalytique à écoulement coaxial descendant, dans laquelle le dispositif est placé à la surface dudit lit fixe.

Ce réacteur peut être à écoulement de type co-courant ou contre-courant.

Avantageusement, le dispositif est disposé de manière à pénétrer en partie dans le lit fixe, le dispositif étant de préférence disposé dans un plan horizontal sensiblement parallèle à la surface du lit fixe.

Une stabilisation mécanique de la partie supérieure du lit peut ainsi être obtenue, tel que décrit plus haut.

Dans un mode de réalisation particulier, la partie supérieure du dispositif située au dessus de la surface dudit lit fixe peut former un angle d'inclinaison (u) d'au moins 20° à au moins 160° par rapport à la surface dudit lit.

Dans un autre mode de réalisation particulier, la partie supérieure du dispositif située au dessus de la surface dudit lit fixe représente de 10 à 90%, et de préférence de 30 à 70% de la hauteur totale du dispositif.

De préférence, le ou les éléments déflecteurs constituant ledit dispositif est (sont) situé(s) au niveau des zones du lit fixe où la vitesse superficielle du fluide est maximale.

On peut ainsi placer le dispositif dans les zones les plus sujettes à des perturbations, là où il sera le plus efficace.

Ces zones seront par exemple déterminées par des méthodes de calcul et de modélisation ou empiriquement.

L'utilisation d'un dispositif selon l'invention formant une structure en réseau, par exemple en nid d'abeille, devrait permettre de ne plus être dépendant de la localisation de ces zones, le dispositif couvrant une surface plus importante du lit catalytique.

Avantageusement, le dispositif pourra être introduit dans le réacteur pendant le remplissage en lit fixe, au moyen de trous d'homme ou par l'entrée en tête du réacteur.

L'invention concerne également un réacteur catalytique à écoulement co-axial descendant, par exemple de type co-courant ou contre-courant, pourvu d'un lit fixe de particules solides pour le traitement catalytique d'un flux de fluide, comprenant au moins un dispositif selon l'invention placé à la surface dudit lit fixe.

Dans un mode de réalisation, le réacteur catalytique comprend, en amont dudit dispositif, au moins un distributeur et/ou au moins un pré-distributeur dudit fluide à traiter.

La présence d'un distributeur et/ou d'un pré-distributeur présente l'avantage de réduire la vitesse axiale maximale, ce qui permet de garantir une meilleure distribution de la charge.

Un autre objet de l'invention concerne l'utilisation du réacteur catalytique selon l'invention pour l'hydrotraitement, et préférentiellement l'hydrodésulfuration, de charges hydrocarbonées pétrolières, ou pour le réformage de charges hydrocarbonées pétrolières.

L'invention va être décrite ci-après plus en détail dans cette application, en référence aux dessins schématiques annexés. Sur ces dessins :
- la figure 1 est une vue de dessus du lit catalytique en coupe transversale schématique d'un réacteur catalytique selon l'invention ;
- la figure 2 est une vue en coupe selon la ligne A-A d'une partie du réacteur catalytique représenté sur la figure 1 ;
- la figure 3 est une vue en perspective d'une coupe transversale d'un dispositif de distribution du fluide d'un réacteur;
- la figure 4 est une vue en coupe transversale de la partie supérieure du réacteur et du dispositif de distribution représenté sur la figure3;
- la figure 5 est une vue en perspective partielle de l'intérieur de la partie supérieure du réacteur et du dispositif de distribution représenté sur la figure 3 ;
- la figure 6 est une vue en perspective partielle de l'intérieur de la partie supérieure du réacteur pourvu d'un autre exemple de dispositif de distribution avec lequel la présente invention a été testée.

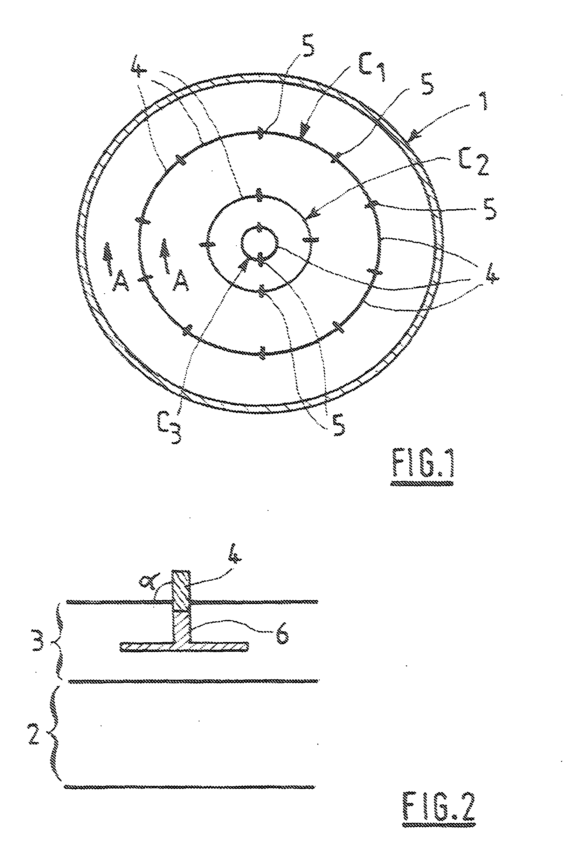

Les figures 1, 2 et 5 représentent l'intérieur d'un réacteur catalytique 1 à écoulement de type co-courant, c'est-à-dire dans lequel les flux liquide et gazeux circulent dans le même sens, pourvu d'un lit fixe de particules solides pour le traitement d'un flux de fluide.

Le lit fixe de particules solides est formé d'un lit inférieur de catalyseur 2 et d'un lit supérieur de billes 3 (figure 2).

Le réacteur 1 est équipé d'un dispositif pour réduire l'effet de la vitesse d'impact d'un fluide sur le lit fixe de particules solides.

Selon l'invention ce dispositif comporte au moins un élément déflecteur 4 destiné à être placé à la surface dudit lit fixe dans le flux de fluide, ledit élément déflecteur étant apte à dévier l'écoulement du fluide de manière à permettre une réduction d'au moins 10% de la valeur maximale de la vitesse de balayage dudit fluide à la surface du lit fixe de particules solides, et une réduction d'au moins 25% de la vitesse moyenne de balayage.

Plus précisément, ces éléments déflecteurs sont placés dans un plan horizontal sensiblement parallèle à la surface du lit fixe, de manière à pénétrer en partie dans celui-ci. Les éléments déflecteurs saillent ainsi au moins partiellement par rapport à la surface dudit lit fixe et présentent une inclinaison d'angle (α) par rapport à la surface du lit fixe.

Dans l'exemple représenté, le dispositif est formé de plusieurs éléments déflecteurs 4, chacun formé d'une paroi constituée d'un matériau imperméable au fluide. Ce matériau sera choisi de manière à résister aux conditions de fonctionnement du réacteur 1 (notamment la température et le type de fluide circulant dans le réacteur).

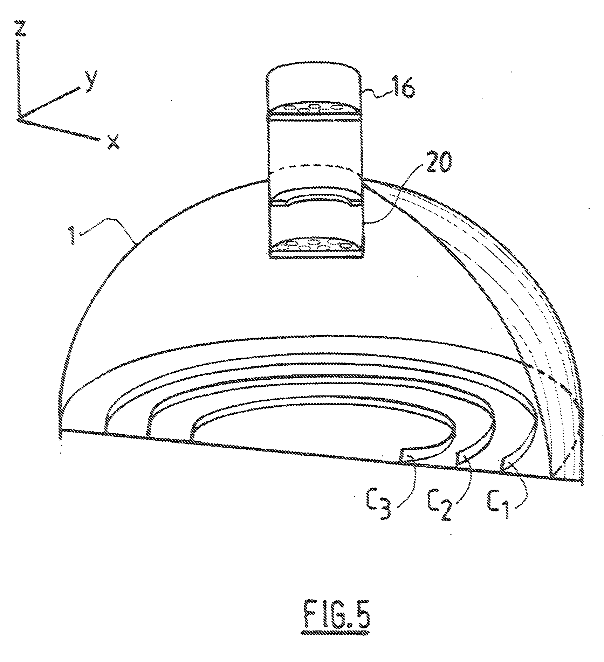

Dans cet exemple, chaque élément déflecteur 4 est formé d'une paroi incurvée, de section transversale en section de cercle, tel que visible sur les figures 1 et 5.

Ces éléments déflecteurs 4 sont introduits dans le réacteur lors du remplissage du lit catalytique, par la tête du réacteur ou par un trou d'homme. Dans l'exemple représenté, ces éléments déflecteurs 4 sont assemblés ensemble au moyen de fixations amovibles 5, par exemple au moyen de boulons, de manière à former un dispositif selon l'invention présentant trois cylindres ou cerceaux C1, C2, C3 disposés de manière concentrique les uns par rapport aux autres et autour de l'axe du réacteur 1.

Le dispositif selon l'invention représenté sur les figures 1, 2 et 5 est également pourvu d'un moyen de maintien 6, solidaire des éléments déflecteurs 4. Dans l'exemple, ce moyen de maintien 6 est un pied présentant une section en forme de T renversé (voir figure 2), et est destiné à être inséré dans le lit fixe de particules, et plus précisément dans le lit de billes, tel que représenté sur la figure 2. Une telle insertion permet d'éviter que le dispositif selon l'invention s'enfonce dans le lit catalytique. Bien entendu, d'autres formes du moyen de maintien 6 peuvent être envisagées, pourvu qu'elles permettent d'éviter l'enfoncement du dispositif.

Dans cet exemple, le pied de maintien 6 s'étend sur toute la longueur de chaque cylindre C1, C2, C3 du dispositif. On peut toutefois envisager une pluralité de pieds distincts régulièrement répartis. En outre, le ou les pieds de maintien peuvent être fixés de manière amovible ou définitive aux éléments déflecteurs du dispositif, par tout moyen approprié.

Dans l'exemple représenté, les éléments déflecteurs 4 présentent une hauteur d'une cinquantaine de millimètres, et le pied de maintien présente une hauteur de l'ordre d'une centaine de millimètres, la totalité du pied étant insérée dans le lit catalytique, et, dans le cas présent, dans le lit de billes.

La hauteur du dispositif selon l'invention, et en particulier, la hauteur de la partie du dispositif située au dessus de la surface du lit catalytique, peut toutefois être variable, et sera suffisante pour permettre une réduction d'au moins 10% de la valeur maximale de la vitesse de balayage et d'au moins 25% de la valeur moyenne de la vitesse de balayage du fluide circulant dans le réacteur.

L'angle d'inclinaison (α) de chacun des éléments déflecteurs 4 par rapport à la surface du lit catalytique est de 90° dans l'exemple représenté, cet angle pourra toutefois varier d'au moins 20° à au moins 160° selon les modes de réalisation.

Le dispositif selon l'invention sera préférentiellement placé au niveau des zones de la surface du lit catalytique où la vitesse superficielle est maximale. Ces zones peuvent être déterminées par des méthodes de calcul et de modélisation et/ou grâce à des observations empiriques visuelles sur des installations industrielles existantes.

A cet effet, on utilisera par exemple la méthode dite CFD (Computational Fluid Dynamics ou Calcul Numérique de Mécanique des Fluides) qui est un outil informatique connu de l'homme de l'art permettant de visualiser et prédire les écoulements dans les géométries à l'aide de simulations basées sur le calcul d'équations (modèles) décrivant les phénomènes physiques en jeu.

La méthode CFD est également utilisée pour le calcul des vitesses d'un fluide telles que les vitesses de balayage, comme cela est connu de l'homme de l'art. Elle est par exemple décrite dans l'ouvrage « An introduction to Computational Fluid Dynamics », H.K. VERSTEEG & W. MALALASEKERA, édité par PEARSON, PRENTICE HALL en 1995.

### EXEMPLES

Les exemples suivants illustrent les avantages d'un dispositif conforme à l'invention utilisé dans un réacteur catalytique sans toutefois en limiter la portée.

Dans ces exemples, la méthode CFD utilisée pour la détermination des vitesses de balayage et d'impact est le logiciel FLUENT et l'écoulement considéré est tridimensionnel et stationnaire.

Le maillage utilisé est non structuré, il est composé d'environ 600 000 mailles et, afin de prendre en compte au mieux la géométrie du distributeur et l'importance des gradients dans cette zone, il a été affiné à sa proximité.

Le modèle choisi pour modéliser la turbulence de la phase gazeuse est le modèle de turbulence RSM (Reynolds Stress Model), à 7 équations.

### Exemple 1

Dans cet exemple, le réacteur catalytique est un réacteur sphérique de diamètre intérieur de 3,7m.

Il contient un lit catalytique fixe dont les principales caractéristiques géométriques sont les suivantes :

| | |
|---|---|
| Hauteur | 2,5 m |
| Distance de la surface du lit catalytique au dispositif de distribution : | 767mm. |

Le réacteur sert à effectuer une réaction chimique de reformage catalytique, par exemple d'une coupe essence, naphta, ou analogue.

L'alimentation du réacteur en fluide à traiter s'effectue dans les conditions suivantes :

| | |
|---|---|
| Débit | 100 t/h |
| Pression opératoire | 26 bars |
| Densité des vapeurs | 8 kg/m3 |
| Viscosité de la vapeur | 0,018 Centipoise |

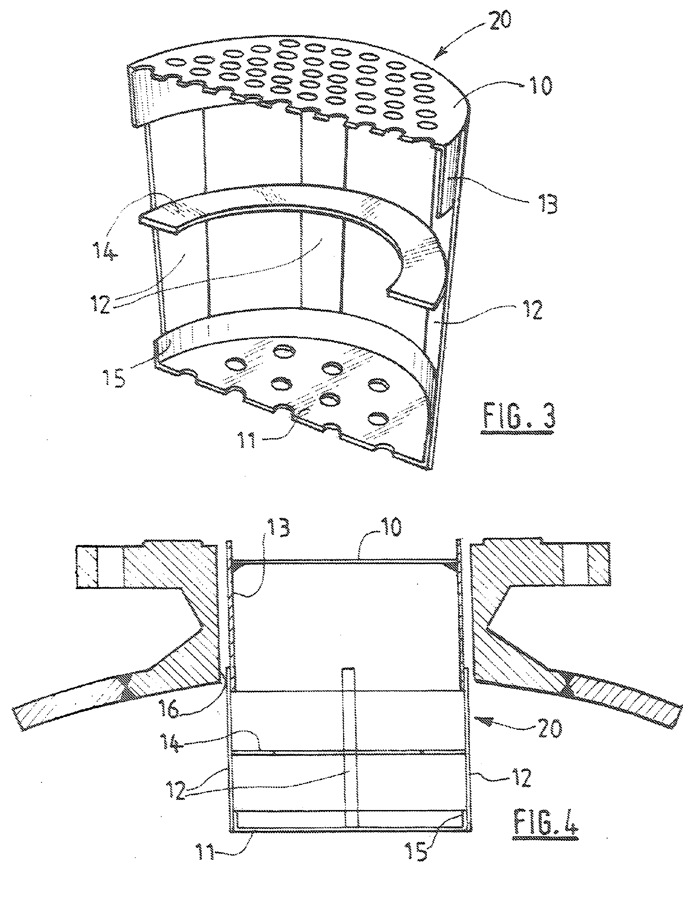

Dans cet exemple, on a utilisé comme dispositif de distribution, un dispositif de distribution 20 du type de celui décrit dans le document FR 2 284 280 et représenté sur les figures 3 et 4 de la présente invention.

Ce dispositif de distribution 20 comprend :
- une première plaque métallique perforée 10, formant un pré-distributeur, disposée à l'extrémité amont du dispositif de distribution 20, dans le sens d'écoulement du fluide à traiter et qui fait office de pré-distributeur,
- une seconde plaque métallique perforée 11, parallèle à la précédente, et disposée à l'extrémité aval du dispositif de distribution 20, qui fait office de distributeur proprement dit, cette plaque étant en outre pourvue d'un rebord 15 orienté vers l'intérieur du distributeur 20, perpendiculairement à celui-ci, de 50 mm de hauteur ;
- des bandes métalliques 12, qui réunissent les bords des plaques 10 et 11 auxquelles elles sont perpendiculaires, ces bandes étant ici au nombre de quatre et mesurant 400 mm de hauteur, 25 mm de large et 6 mm d'épaisseur ;

- une jupe métallique cylindrique 13 attenante à la périphérie de la plaque 10 et reliant les bandes 12 entre elles, de 150 mm de hauteur ;
- un insert annulaire métallique 14 en forme de couronne plate solidaire des bandes 12 et faisant saillie axialement de 50 mm à partir de la face interne de ces bandes vers l'intérieur du distributeur 20, parallèlement aux plaques 10 et 11.

La porosité de la plaque amont 10, c'est-à-dire la faculté de laisser s'écouler un pourcentage du fluide qui la traverse, est de 30-35%, tandis que la porosité de la plaque aval 11 est de 14-15%.

Le diamètre du dispositif de distribution 20 est de 496 mm.

L'insert 14 est placé à 200 mm de la plaque aval 11, et à 470 mm de la plaque amont 10.

La figure 4 montre la position du dispositif de distribution 20 à l'intérieur du conduit 16 d'alimentation en fluide du réacteur. La totalité de la jupe 13 est insérée dans ce conduit 16.

Le dispositif selon l'invention pour réduire l'effet de la vitesse de balayage, ici utilisé, est formé de trois éléments déflecteurs cylindriques (C1, C2, C3) de 150 mm de hauteur et de diamètres respectifs 2,9 m, 1,6 m et 0,5 m, disposés concentriquement autour de l'axe du réacteur. Ces éléments déflecteurs pénètrent de 100 mm dans le lit de billes.

### Vitesse de balayage :

Dans cet exemple, on a démontré que les valeurs maximale et moyenne de la vitesse de balayage calculées à la surface du lit en présence du dispositif de réduction de la vitesse d'impact selon l'invention sont respectivement de 1,44 et 0,69 m/s, contre 1,63 et 0,94 m/s respectivement en l'absence du dispositif selon l'invention. Ainsi, le dispositif selon l'invention a permis dans ce cas une réduction de la valeur maximale et moyenne de la vitesse de balayage de respectivement 12% et 27% dans la configuration de l'exemple.

### Vitesse d'impact:

Egalement, avec les mêmes éléments déflecteurs, en présence du dispositif selon l'invention, on a démontré que les valeurs maximale et moyenne de la vitesse d'impact calculées à la surface du lit en présence du dispositif de réduction de la vitesse d'impact selon l'invention sont respectivement de 1,65 et 0,94 m/s, contre 1,83 et 1,18 m/s respectivement en l'absence du dispositif selon l'invention. Ainsi, le dispositif selon l'invention a permis une réduction des valeurs maximale et moyenne de la vitesse d'impact de respectivement 10% et 20% dans la configuration de l'exemple.

La mise en place des éléments déflecteurs permet ainsi une réduction considérable de la vitesse d'impact et de la vitesse de balayage. Il a toutefois été constaté que ces vitesses sont faibles entre l'élément déflecteur C2 et le centre du réacteur, alors qu'elles sont plus élevées entre les éléments déflecteurs C2 et C1 (le plus excentré). Dans l'exemple suivant, l'élément déflecteur C3 le plus près du centre, qui a un effet bénéfique limité, a donc été supprimé et remplacé par un élément déflecteur situé entre les deux autres éléments déflecteurs.

### Exemple 2

Cet exemple ne diffère de l'exemple 1 que par les diamètres des éléments déflecteurs. Ainsi, le dispositif selon l'invention pour réduire l'effet de la vitesse d'impact, ici utilisé, est formé de trois éléments déflecteurs cylindriques (C1, C2, C3) de 150 mm de hauteur et de diamètres respectifs 2,9 m, 2,25 m et 1,6 m, disposés concentriquement. Ces éléments déflecteurs pénètrent de 100 mm dans le lit de billes.

### Vitesse de balayage :

On a démontré dans ce deuxième exemple que les valeurs maximale et moyenne de la vitesse de balayage calculées à la surface du lit en présence du dispositif de réduction de la vitesse d'impact selon l'invention sont respectivement de 1,35 et 0,53 m/s, contre 1,63 et 0,94 m/s respectivement en l'absence du dispositif selon l'invention. Ainsi, le dispositif selon l'invention a permis une réduction de la valeur maximale et moyenne de la vitesse de balayage de respectivement 17% et 43% dans la configuration de l'exemple 2.

### Vitesse d'impact:

Egalement, en présence du dispositif selon l'invention, on a démontré dans cet exemple 2 que les valeurs maximale et moyenne de la vitesse d'impact calculées à la surface du lit en présence du dispositif de réduction de la vitesse d'impact selon l'invention sont respectivement de 1,55 et 0,81 m/s, contre 1,83 et 1,18 m/s respectivement en l'absence du dispositif selon l'invention. Ainsi, le dispositif selon l'invention a permis une réduction des valeurs maximale et moyenne de la vitesse d'impact de respectivement 15% et 31 % dans la configuration de l'exemple 2.

Ainsi, un positionnement optimisé des éléments déflecteurs au niveau des zones où les vitesses sont les plus élevées permet de réduire encore davantage les vitesses d'impact et de balayage.

### Exemple 3

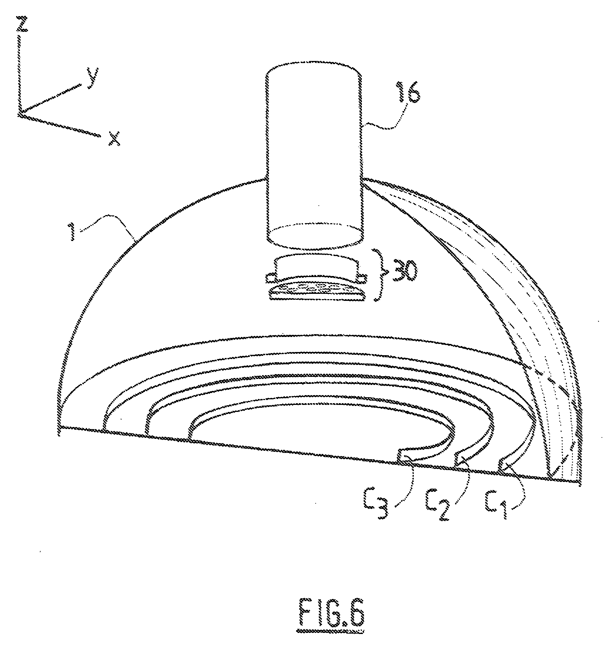

Cet exemple ne diffère de l'exemple 2 précédent que par la structure du dispositif de distribution utilisé, qui est représenté schématiquement à la figure 6.

Dans cet exemple 3, le dispositif de distribution 30 présente une structure plus simple tel que visible sur la figure 6. Les trois éléments déflecteurs cylindriques co-axiaux (C1, C2, C3) sont identiques à ceux décrits dans l'exemple 2.

### Vitesse de balayage :

On a démontré dans ce cas que les valeurs maximale et moyenne de la vitesse de balayage calculées à la surface du lit en présence du dispositif de réduction de la vitesse d'impact selon l'invention sont respectivement de 4,22 et 1,17 m/s, contre 5,3 et 1,91 m/s respectivement en l'absence du dispositif selon l'invention. Ainsi, le dispositif selon l'invention a permis une réduction de la valeur maximale et moyenne de la vitesse de balayage de respectivement 20% et 38% dans la configuration de l'exemple 3.

### Vitesse d'impact:

Egalement, on a démontré que les valeurs maximale et moyenne de la vitesse d'impact calculées à la surface du lit en présence du dispositif de réduction de la vitesse d'impact selon l'invention sont respectivement de 4,41 et 1,43 m/s, contre 5,47 et 2,15 m/s respectivement en l'absence du dispositif selon l'invention. Ainsi, le dispositif selon l'invention a permis une réduction des valeurs maximale et moyenne de la vitesse d'impact de respectivement 19% et 33% dans la configuration de l'exemple 3.

Par ailleurs, dans tous les cas, une étude complémentaire par CFD des vecteurs vitesses dans un plan vertical a montré que la recirculation de fluide se produisant habituellement à la surface du lit catalytique est déplacée au dessus du dispositif selon l'invention ce qui représente un atout supplémentaire pour le bon fonctionnement du réacteur.

Le dispositif de réduction de l'effet de la vitesse d'impact selon l'invention, en réduisant significativement les valeurs maximales et moyennes des vitesses de balayage et d'impact, permet ainsi une nette réduction des perturbations au niveau de la surface du lit catalytique dans le réacteur, notamment un réacteur d'hydrotraitement, ce qui se traduit par:
- un plus faible entrainement du catalyseur (diminution de la formation de « vagues » et de croûtes et augmentation de la durée de cycle), et
- la possibilité d'augmenter le débit de charge traitée, ou possibilité d'augmenter de quelques centimètres la hauteur du lit catalytique notamment en remplacement des inertes de stabilisation du lit (augmentation légère du volume de catalyseur et donc obtention d'une VVH ou vitesse volumique horaire plus favorable).

## Revendications

1. Dispositif pour réduire l'effet de la vitesse d'impact d'un fluide sur un lit fixe de particules solides et limiter les re-circulations radiales superficielles de ce fluide dans ledit lit, **caractérisé en ce qu'**il comporte au moins un élément déflecteur (4) destiné à être placé à la surface dudit lit fixe dans le flux de fluide, ledit élément déflecteur étant apte à dévier l'écoulement du fluide de manière, notamment, à permettre une réduction d'au moins 10% de la vitesse maximale de balayage du fluide à la surface du lit fixe et d'au moins 25% de sa vitesse moyenne de balayage, ledit dispositif comprenant au moins un élément déflecteur formé d'une pluralité de parois imperméables solidaires les unes des autres de manière à former des alvéoles agencées en réseau, ou alternativement, ledit dispositif comprenant une pluralité d'éléments déflecteurs dimensionnés de manière à pouvoir être disposés de manière concentrique les uns par rapport aux autres.

2. Dispositif selon la revendication 1, **caractérisé en ce que** chaque élément déflecteur est formé d'au moins une paroi en un matériau imperméable au fluide.

3. Dispositif selon l'une quelconque des revendications précédentes, **caractérisé en ce que** lesdits éléments déflecteurs (4) sont reliés les uns aux autres par des moyens de fixation (5) amovibles.

4. Dispositif selon l'une quelconque des revendications précédentes **caractérisé en ce qu'**il comporte au moins un moyen de maintien (6) desdits éléments déflecteurs, notamment ledit moyen de maintien (6) est un pied solidaire desdits éléments déflecteurs destiné à être implanté dans le lit catalytique.

5. Dispositif selon la revendication 4, **caractérisé en ce que** ledit moyen de maintien (6) est une grille.

6. Utilisation du dispositif selon l'une quelconque des revendications précédentes pour réduire l'effet de la vitesse de d'impact d'un fluide sur un lit fixe de particules solides pour le traitement d'un flux de fluide dans un réacteur catalytique à écoulement co-axial descendant, dans laquelle le dispositif est placé à la surface dudit lit fixe .

7. Utilisation du dispositif selon la revendication 6 dans laquelle le dispositif est disposé de manière à pénétrer en partie dans le lit fixe de particules solides, notamment la partie du dispositif située au dessus de la surface dudit lit fixe forme un angle d'inclinaison (α) d'au moins 20° à au moins 160° par rapport à la surface dudit lit.

8. Utilisation du dispositif selon la revendication 6 ou 7, **caractérisée en ce que** ledit dispositif est situé au niveau des zones du lit fixe où la vitesse superficielle du fluide est maximale.

9. Utilisation selon l'une des revendications 6 à 8, dans laquelle ledit dispositif est introduit dans le réacteur pendant le remplissage du lit fixe de particules solides, au moyen de trous d'homme dans le réacteur ou par l'entrée en tête du réacteur.

10. Réacteur catalytique (1) à écoulement co-axial descendant pourvu d'un lit fixe de particules solides pour le traitement catalytique d'un flux de fluide, **caractérisé en ce qu'**il comprend au moins un dispositif selon l'une quelconque des revendications 1 à 5, placé à la surface dudit lit fixe de particules solides, notamment le dispositif pénètre en partie dans le lit fixe.

11. Réacteur catalytique selon la revendication 10, **caractérisé en ce que** la partie du dispositif située au dessus de la surface dudit lit fixe présente un angle d'inclinaison (α) d'au moins 20° à au moins 160° par rapport à la surface dudit lit.

12. Réacteur catalytique selon la revendication 10 ou 11 **caractérisé en ce qu'**il comprend en amont dudit dispositif au moins un distributeur et/ou au moins un pré-distributeur dudit fluide à traiter.

13. Utilisation du réacteur catalytique selon l'une des revendications 10 à 12 pour l'hydrotraitement, et préférentiellement l'hydrodésulfuration, de charges hydrocarbonées pétrolières, notamment pour le réformage de charges hydrocarbonées pétrolières.

## Claims

1. Device for reducing the effect of the impact velocity of a fluid on a fixed bed of solid particles and for limiting any surface radial recirculation of this fluid in said bed, **characterized in that** it comprises at least one deflector element (4) intended to be placed at the surface of said fixed bed in the fluid stream, said deflector element being capable of deflecting the flow of the fluid so as, in particular, to reduce the maximum sweep velocity of the fluid at the surface of the fixed bed by at least 10% and to reduce its average sweep velocity by at least 25%, said device comprising at least one deflector element formed from a plurality of impermeable walls fastened to one another so as to form cells arranged in a network, or, alternatively, said device comprising a plurality of deflector elements sized so as to be able to be placed concentrically with respect to one another.

2. Device according to Claim 1, **characterized in that** each deflector element is formed from at least one wall made of a material impermeable to the fluid.

3. Device according to either of the preceding claims, **characterized in that** said deflector elements (4) are connected together by removable fixing means (5).

4. Device according to any one of the preceding claims, **characterized in that** it comprises at least one supporting means (6), for supporting said deflector elements, in particular said supporting means (6) being a foot fastened to said deflector elements and intended to be implanted in said catalyst bed.

5. Device according to Claim 4, **characterized in that** said supporting means (6) is a grid.

6. Use of the device according to any one of the preceding claims for reducing the effect of the impact velocity of a fluid on a fixed bed of solid particles for treating a fluid stream in a coaxial downflow catalytic reactor in which the device is placed at the surface of said fixed bed.

7. Use of the device according to Claim 6, in which the device is placed so that it partly penetrates the fixed bed of solid particles, in particular that part of the device lying above the surface of said fixed bed making an angle of inclination (α) to the surface of said bed ranging from at least 20° to at least 160°.

8. Use of the device according to Claim 6 or 7, **characterized in that** said device is located in the zones of the fixed bed where the surface velocity of the fluid is a maximum.

9. Use according to one of Claims 6 to 8, in which said device is introduced into the reactor, while it is being filled with the fixed bed of solid particles, by means of inspection holes in the reactor or via the inlet at the top of the reactor.

10. Coaxial downflow catalytic reactor (1) provided with a fixed bed of solid particles for the catalytic treatment of a fluid stream, **characterized in that** it comprises at least one device according to any one of Claims 1 to 5, placed at the surface of said fixed bed of solid particles, in particular the device partly penetrating the fixed bed.

11. Catalytic reactor according to Claim 10, **characterized in that** the part of the device laying above the surface of said fixed bed makes an angle of inclination (α) to the surface of said bed ranging from at least 20° to at least 160°.

12. Catalytic reactor according to Claim 10 or 11, **characterized in that** it comprises, upstream of said device, at least one distributor and/or at least one predistributor for distributing or predistributing said fluid to be treated.

13. Use of the catalytic reactor according to one of Claims 10 to 12 for the hydrotreatment, and preferably the hydrodesulphurization, of petroleum hydrocarbon feedstocks, in particular for the reforming of petroleum hydrocarbon feedstocks.

## Patentansprüche

1. Vorrichtung zum Verringern der Wirkung der Auftreffgeschwindigkeit eines Fluids auf ein Festbett fester Partikel und Begrenzen der radialen Oberflächenrückzirkulation des Fluids in dem Bett,
**dadurch gekennzeichnet, dass**
sie zumindest ein Ablenkelement (4) enthält, das dazu bestimmt ist, an der Oberfläche des Festbetts in dem Fluss des Fluids angeordnet zu werden,
wobei das Ablenkelement geeignet ist, die Strömung des Fluids so abzulenken, dass insbesondere eine Verringerung der maximalen Abtastgeschwindigkeit des Fluids auf der Oberfläche des Festbetts um mindestens 10% und seiner mittleren Abtastgeschwindigkeit um mindestens 25% ermöglicht wird,
wobei die Vorrichtung zumindest ein Ablenkelement enthält, das aus einer Mehrzahl undurchlässiger Wände gebildet ist, die so miteinander verbunden sind, dass sie Zellen bilden, die als Gitter ausgebildet sind, oder
die Vorrichtung alternativ eine Mehrzahl von Ablenkelementen enthält, die so bemessen sind, dass sie konzentrisch zueinander angeordnet werden können.

2. Vorrichtung gemäß Anspruch 1, **dadurch gekennzeichnet, dass** jedes Ablenkelement aus zumindest einer Wand aus einem Material, das für das Fluid undurchlässig ist, gebildet ist.

3. Vorrichtung gemäß einem der vorigen Ansprüche, **dadurch gekennzeichnet, dass** die Ablenkelemente (4) über lösbare Befestigungselemente (5) miteinander verbunden sind.

4. Vorrichtung gemäß einem der vorigen Ansprüche, **dadurch gekennzeichnet, dass** sie zumindest ein Mittel zum Halten (6) der Ablenkelemente enthält, wobei das Haltemittel (6) insbesondere ein Fuß ist, der mit den Ablenkelementen verbunden und dazu bestimmt ist, in das Festbett eingesetzt zu werden.

5. Vorrichtung gemäß Anspruch 4, **dadurch gekennzeichnet, dass** das Haltemittel (6) ein Gitter ist.

6. Verwendung einer Vorrichtung gemäß einem der vorigen Ansprüche zum Verringern der Wirkung der Auftreffgeschwindigkeit eines Fluids auf ein Festbett fester Partikel für die Behandlung eines Flusses eines Fluids in einem katalytischen Reaktor mit koaxial absteigender Strömung, wobei die Vorrichtung an der Oberfläche des Festbetts angeordnet ist.

7. Verwendung der Vorrichtung gemäß Anspruch 6,
wobei die Vorrichtung so angeordnet ist, dass sie teilweise in das Festbett der festen Partikel eindringt,
wobei insbesondere der Abschnitt der Vorrichtung, der unter der Oberfläche des Festbetts sitzt, gegenüber der Oberfläche des Betts einen Neigungswinkel (α) von mindestens 20° bis mindestens 160° aufweist.

8. Verwendung der Vorrichtung gemäß Anspruch 6 oder 7, **dadurch gekennzeichnet, dass** die Vorrichtung auf dem Niveau der Zonen des Festbetts angeordnet ist, wo die Oberflächengeschwindigkeit des Fluids maximal ist.

9. Verwendung der Vorrichtung gemäß einem der Ansprüche 6 bis 8, wobei die Vorrichtung während des Füllens des Festbetts mit festen Partikeln durch das Mannloch in dem Reaktor oder über den Eingang am Kopf des Reaktors in den Reaktor eingeführt wird.

10. Katalytischer Reaktor (1) mit koaxial absteigender Strömung, der mit einem Festbett fester Partikel versehen ist für die katalytische Behandlung eines Flusses eines Fluids,
**dadurch gekennzeichnet, dass**
er zumindest eine Vorrichtung gemäß einem der Ansprüche 1 bis 5 enthält, die an der Oberfläche des Festbetts fester Partikel angeordnet ist,
wobei die Vorrichtung insbesondere teilweise in das Festbett eindringt.

11. Katalytischer Reaktor gemäß Anspruch 10, **dadurch gekennzeichnet, dass** der Abschnitt der Vorrichtung, der unter der Oberfläche des Festbetts sitzt, gegenüber der Oberfläche des Betts einen Neigungswinkel (α) von mindestens 20° bis mindestens 160° aufweist.

12. Katalytischer Reaktor gemäß Anspruch 10 oder 11, **dadurch gekennzeichnet, dass** er stromaufwärts der Vorrichtung zumindest einen Verteiler und/oder zumindest einen Vorverteiler des zu behandelnden Fluids enthält.

13. Verwendung eines katalytischen Reaktors gemäß einem der Ansprüche 10 bis 12 zur Hydrobehandlung, vorzugsweise Hydrodesulfurierung, von Erdölkohlenwasserstoffladungen, insbesondere zur Reformierung der Erdölkohlenwasserstoffladungen.
